# EUROPÄISCHE PATENTSCHRIFT

(11) **EP 1 423 289 B1**
(45) Veröffentlichungstag und Bekanntmachung des Hinweises auf die Patenterteilung: **18.01.2006**
(21) Anmeldenummer: 02769916.4
(22) Anmeldetag: 06.09.2002
(51) Int. Cl.: B60K 31/00, F16H 61/02

(54) **GESCHWINDIGKEITSREGELUNG EINES KRAFTFAHRZEUGES MIT AUTOMATISIERTEM SCHALTGETRIEBE**
ADJUSTMENT OF THE SPEED OF A MOTOR VEHICLE WITH AN AUTOMATIC GEARBOX
REGULATION DE LA VITESSE D'UN VEHICULE AUTOMOBILE A BOITE DE VITESSES AUTOMATIQUE

(30) Priorität: 06.09.2001 DE 10143735
(43) Veröffentlichungstag der Anmeldung: 02.06.2004
(73) Patentinhaber: SIEMENS AKTIENGESELLSCHAFT, 80333 München (DE)
(72) Erfinder: LANKES, Martin, 93055 Regensburg (DE); PINDL, Stephan, 93077 Bad Abbach (DE)
(86) Internationale Anmeldenummer: PCT/DE2002/003298
(87) Internationale Veröffentlichungsnummer: WO 2003/022617

(56) Entgegenhaltungen:
- EP-A- 1 103 742
- DE-A- 10 065 543
- DE-A- 19 834 409
- DE-A- 19 929 693
- PATENT ABSTRACTS OF JAPAN vol. 18, no. 274 (M-1611), 25. Mai 1994 (1994-05-25) -& JP 06 048216 A (AISIN AW), 22. Februar 1994 (1994-02-22)

## Beschreibung

Die Erfindung betrifft ein Verfahren zum Entlasten des Fahrers eines Kraftfahrzeuges, dessen Antriebsstrang ein Getriebe aufweist, das in einem Automatenmodus und in einem Manuellmodus betrieben werden kann, bei dem die folgenden Schritte automatisch durchgeführt werden:
a) Erfassen, ob eine Regelung der Fahrzeuggeschwindigkeit durchgeführt werden soll,
b) Einleiten der Regelung der Fahrzeuggeschwindigkeit, wenn eine Regelung der Fahrzeuggeschwindigkeit durchgeführt werden soll, und
c) Durchführen der Regelung der Fahrzeuggeschwindigkeit.

Weiterhin betrifft die Erfindung eine Vorrichtung zum Einleiten und Durchführen einer automatischen Geschwindigkeitsregelung eines Kraftfahrzeuges, dessen Antriebsstrang ein Getriebe aufweist, das in einem Automatenmodus und in einem Manuellmodus betreibbar ist.

Die gattungsgemäßen Verfahren und Vorrichtungen wie in EP-A-1103742 offenbart wurden mit der Zielsetzung entwickelt, den Fahrer von Kraftfahrzeugen durch geeignete Hilfsmittel von seinen vielfältigen Aufgaben zu entlasten und damit den Komfort zu steigern, wobei die gattungsgemäßen Vorrichtungen im Allgemeinen als "Tempomat" bezeichnet werden. Die Aufgabe des Tempomaten besteht darin, die seitens des Fahrers eingegebene Geschwindigkeit zu halten. Die Entlastung des Fahrers besteht darin, dass ihm die zur Konstanthaltung der Geschwindigkeit nötigen Eingriffe weitgehend abgenommen werden. Der Tempomat kompensiert durch entsprechenden Eingriff in den Antriebsstrang des Fahrzeugs die auf das Fahrzeug einwirkenden geschwindigkeitsverändernden Einflüsse wie Fahrbahnsteigung, Reibungswiderstand, Fahrzeugbeladung und so weiter. Die Effizienz des Tempomaten hängt insbesondere von der Drehmomentcharakteristik des Motors und/oder zusätzlichen Antriebsquellen (beispielsweise zusätzlichen Elektromotoren, Startergeneratoren und so weiter), dem verwendeten Getriebekonzept (automatisiertes beziehungsweise nicht automatisiertes Getriebe), einem manuellen oder automatischen Bremseingriff und weiteren Hilfsmitteln ab, die beispielsweise zur Erkennung von in Fahrtrichtung liegenden Hindernissen (Abstand) und deren Bewegungszustand verwendet werden können.

Neben dem Konstanthalten der durch den Fahrer vorgegebenen Geschwindigkeit durch geeignete Motor- und/oder Getriebeeingriffe, bieten einige Tempomaten eine Reihe von Zusatzfunktionen. Beispielsweise kann der Fahrer bei einigen Ausführungsformen eine Wunsch-Maximalgeschwindigkeit vorgeben. In diesem Fall begrenzt der Tempomat durch Motor- und/oder Getriebeeingriffe das Radmoment derart, dass die Wunsch-Maximalgeschwindigkeit nicht überschritten wird. Weiterhin existieren bereits Lösungen, bei denen der Fahrer die eingestellte Wunschgeschwindigkeit ohne Fahrpedalbetätigung steigern oder verringern kann, vorzugsweise innerhalb von vorgegebenen Grenzen, indem er entsprechende Bedienelemente des Tempomaten betätigt. Bei einigen Ausführungsformen kann der Tempomat die Geschwindigkeit bei der Detektion eines Hindernisses, beispielsweise eines vorausfahrenden Fahrzeuges, in geeigneter Weise reduzieren, wozu gegebenenfalls ein automatisierter Bremseingriff durchgeführt wird, und anschließend auf den ursprünglich eingestellten Wert zurückführen.

Tempomaten werden besonders häufig in Verbindung mit automatisierten Getrieben angeboten, weil zur Konstanthaltung der Wunschgeschwindigkeit ein Motoreingriff oftmals nicht ausreicht, beispielsweise an Steigungen, und die gewünschte Geschwindigkeit nur mit Hilfe eines parallelen Übersetzungswechsels zu realisieren ist. Insbesondere bei Motoren, die ein verhältnismäßig hohes Drehmoment bereitstellen können, werden Tempomaten jedoch auch zunehmend in Verbindung mit nicht automatisierten Getrieben (Standard-Handschaltgetrieben) angeboten. Die Einstellung der Wunschgeschwindigkeit kann hier nur durch Variation des Motordrehmoments erfolgen, da ein automatisierter Getriebeeingriff nicht möglich ist. Dies hat zur Folge, dass das Wirkungsband des Tempomaten stärker als bei Fahrzeugen mit automatisierten Getrieben eingeschränkt ist. Soll beispielsweise über den Tempomaten die Wunschgeschwindigkeit verändert werden, so stehen als physikalische Grenzen die zur eingelegten Übersetzungsstufe korrespondierenden Geschwindigkeiten zur Verfügung, die sich aus den Extremdrehzahlwerten des Motors ergeben, das heißt aus Leerlauf- und Abregeldrehzahl. Eine Wunschgeschwindigkeit, die außerhalb dieses Bereiches liegt, kann nur durch einen manuellen, vom Fahrer ausgeführten Übersetzungswechsel eingestellt werden.

Neben automatisierten Getrieben und Standard-Handschaltgetrieben werden inzwischen auch so genannte automatisierte Handschaltgetriebe eingesetzt. Derartige automatisierte Handschaltgetriebe automatisieren die Standard-Handschaltgetriebe durch eine automatisierte Betätigung von Kupplung und Getriebe. Die automatisierten Handschaltgetriebe können sowohl in einem Manuellmodus betrieben werden, indem der Fahrer Entscheidungen bezüglich der Übersetzungsauswahl durch manuelle Eingriffe (etwa durch Antippen eines Plus/Minus-Schalthebels) selbst trifft, oder in einem Automatenmodus, in dem die übersetzungsauswahl automatisiert erfolgt, beispielsweise durch Zugriff auf hinterlegte Schaltkennlinien, insbesondere in Verbindung mit Fahrstrategieinformationen.

Aus der Druckschrift DE 199 29 693 A1 ist ein Verfahren zur manuellen Vorgabe der Übersetzung eines stufenlosen Getriebes eines Kraftfahrzeugs bekannt. Das Getriebe kann dabei sowohl in einer automatischen als auch in einer manuellen Betriebsart betrieben werden. In der manuellen Betriebsart wird ein zur Fahrzeuggeschwindigkeit proportionales Signal als Soll-Vorgabe für die Betriebspunkt-Führung der Motor-GetriebeEinheit manuell vorgegeben.

Der Erfindung liegt die Aufgabe zugrunde, die gattungsgemäßen Verfahren und Vorrichtungen derart weiterzubilden, dass deren Effizienz im Vergleich zum vorstehend erläuterten Stand der Technik vergrößert wird.

Diese Aufgabe wird durch die in den unabhängigen Ansprüchen angegebenen Merkmale gelöst.

Vorteilhafte Ausgestaltungen und Weiterbildungen der Erfindung ergeben sich aus den abhängigen Ansprüchen.

Das erfindungsgemäße Verfahren zum Entlasten des Fahrers eines Kraftfahrzeuges baut auf dem gattungsgemäßen Stand der Technik dadurch auf, dass bei der Durchführung des Schrittes b) und/oder des Schrittes c) ein oder mehrmals festgestellt wird, ob das Getriebe in dem Automatenmodus oder in dem Manuellmodus betrieben wird, um gegebenenfalls einen Wechsel in den Automatenmodus des Getriebes auszulösen, wenn das Getriebe in dem Manuellmodus betrieben wird. Der Begriff "Manuellmodus" besagt hierbei, dass der Fahrer den Gang wechselt, indem er beispielsweise einen Tipptaster (manuell) betätigt. Er muss jedoch nicht die Kupplung betätigen und den Gangwechsel ausführen, da diese Funktionen vom Kupplungs- beziehungsweise Getriebeaktuator übernommen werden. Im Gegensatz hierzu werden beim "Automatenmodus" alle Gangwechsel automatisch angestoßen, das heißt es ist kein Eingriff des Fahrers, beispielsweise über den Tipptaster, nötig. Durch die erfindungsgemäße Lösung wird die Effizienz im Vergleich zum Stand der Technik vergrößert, weil nach einem Wechsel in den Automatenmodus die eingangs erwähnten physikalischen Grenzen für die erreichbare Wunschgeschwindigkeit nicht mehr auf die mit einer eingelegten Übersetzungsstufe korrespondierenden Geschwindigkeiten beschränkt sind. In dem Automatenmodus kann eine optimierte Geschwindigkeitsregelung durchgeführt werden, weil neben Motordrehmomenteingriffen auch Eingriffe in die Übersetzungsauswahl möglich sind.

Das erfindungsgemäße Verfahren sieht vor, dass bei der Durchführung des Schrittes b) und/oder des Schrittes c) ein oder mehrmals bestimmt wird, ob eine Veränderung der Übersetzung des Getriebes vorteilhaft ist, und dass der Wechsel in den Automatenmodus nur dann ausgelöst wird, wenn die Veränderung der Übersetzung des Getriebes vorteilhaft ist. Beispielsweise ist es denkbar, dass der Fahrer bei Autobahnfahrt im Manuellmodus des Getriebes bereits den größten Gang eingelegt hat, so dass ein Wechsel der Übersetzung innerhalb von relativ großen Sollgeschwindigkeitsbereichen nicht vorteilhaft ist. In diesem Fall kann das Getriebe zumindest vorläufig im Manuellmodus weiterbetrieben werden, beispielsweise so lange, bis eine erhebliche Fahrbahnsteigung auftritt.

Bei bestimmten Ausführungsformen des erfindungsgemäßen Verfahrens ist vorgesehen, dass das Auslösen des Wechsels in den Automatenmodus des Getriebes erfolgt, indem dem Fahrer signalisiert wird, dass er den Wechsel des Getriebes in den Automatenmodus manuell beziehungsweise selbsttätig vornehmen sollte. Die Signalisierung erfolgt dabei durch geeignete Signalisierungseinrichtungen, die insbesondere durch optische und/oder akustische Signalisierungseinrichtungen gebildet sein können.

Bei anderen Ausführungsformen des erfindungsgemäßen Verfahrens ist vorgesehen, dass das Auslösen des Wechsels in den Automatenmodus des Getriebes erfolgt, indem eine Getriebesteuerung und/oder -regelung derart angesteuert wird, dass sie den Wechsel automatisch vornimmt. Der automatische Wechsel kann dabei entweder immer oder nur dann vorgenommen werden, wenn festgestellt wurde, dass eine Veränderung der Übersetzung des Getriebes vorteilhaft ist.

Bei allen Ausführungsformen des erfindungsgemäßen Verfahrens kann weiterhin vorgesehen sein, dass zu Beginn der Durchführung des Schrittes b) der Modus gespeichert wird, in dem das Getriebe momentan betrieben wird.

In diesem Zusammenhang sieht eine vorteilhafte Weiterbildung des erfindungsgemäßen Verfahrens vor, dass nach der Durchführung des Schrittes c) der Betrieb des Getriebes in dem gespeicherten Modus sichergestellt wird. Dabei wird nach der Durchführung des Schrittes c) in den Manuellmodus des Getriebes gewechselt, falls dieser Modus vor der Aktivierung der Geschwindigkeitsregelung aktiviert war, während anderenfalls der Automatenmodus beibehalten wird.

Eine vorteilhafte Weiterbildung des erfindungsgemäßen Verfahrens sieht vor, dass der Schritt c) automatisch beendet wird, wenn der Fahrer den Manuellmodus des Getriebes aktiviert. Dies schließt den Einsatz von herkömmlichen Austrittsbedingungen wie beispielsweise Bremspedalbetätigung, Fahrpedalbetätigung, etc. selbstverständlich nicht aus.

Bei einer bevorzugten Ausführungsform des erfindungsgemäßen Verfahrens ist weiterhin vorgesehen, dass der Schritt a) umfasst, dass überwacht wird, ob der Fahrer die Geschwindigkeit ungefähr konstant hält oder versucht, die Geschwindigkeit ungefähr konstant zu halten. Sofern festgestellt wurde, dass der Fahrer die Geschwindigkeit ungefähr konstant hält oder versucht, die Geschwindigkeit ungefähr konstant zu halten, kann beispielsweise ein optisches und/oder akustisches Signal erzeugt werden, dass dem Fahrer anbietet, die Geschwindigkeitsregelung zu aktivieren.

Bei dem erfindungsgemäßen Verfahren ist vorzugsweise weiterhin vorgesehen, dass der Schritt b) und/oder der Schritt c) das ein- oder mehrmalige Erfassen einer Sollgeschwindigkeit umfasst. Beispielsweise kann die aktuelle Istgeschwindigkeit durch das Betätigen einer Taste oder dergleichen als Sollgeschwindigkeit übernommen werden. Die Sollgeschwindigkeit kann jedoch auch unabhängig von der Istgeschwindigkeit erfasst werden. Gibt der Fahrer beispielsweise bei stillstehendem Fahrzeug eine Sollgeschwindigkeit vor, so kann das Fahrzeug nach Lösen der Bremsbetätigung selbsttätig durch geeignete Eingriffe in die Motor- und Getriebesteuerung beziehungsweise -regelung auf die anvisierte Geschwindigkeit beschleunigt werden. Hierzu ist vorzugsweise ein automatischer Übergang von stehendem Fahrzeug über einen Anfahrvorgang hin zu Schaltvorgängen einschließlich Motoreingriffen vorgesehen.

Eine bevorzugte Weiterbildung des erfindungsgemäßen Verfahrens sieht vor, dass bei der Durchführung des Schrittes c) durch ein Einwirken auf den Antriebsstrang und/oder auf andere Komponenten des Fahrzeugs die Istgeschwindigkeit des Fahrzeugs der Sollgeschwindigkeit nachgeführt wird, und dass hierzu ein Beschleunigungsmuster verwendet wird, das aus mehreren unterschiedlichen Beschleunigungsmustern ausgewählt wird. Der Antriebsstrang kann, wie bei allen Ausführungsformen der vorliegenden Erfindung, mehr als einen Antriebsmotor umfassen. Beispielsweise kann ein Verbrennungsmotor mit zugehörigem Startergenerator vorgesehen sein, wobei letzterer auch zum Antrieb des Fahrzeugs verwendet werden kann. Beispielsweise ist es denkbar, bei niedrigen Sollgeschwindigkeiten nur einen Elektromotor zum Antrieb zu verwenden. Die anderen Komponenten des Fahrzeugs können, ohne darauf beschränkt zu sein, insbesondere das Bremssystem umfassen. Bei der Umsetzung von herkömmlichen Beschleunigungsvorgängen ohne Geschwindigkeitsregelung wird üblicherweise die Betätigung des Fahrpedals ausgewertet. Die Fahrpedalinformationen, beispielsweise die Auslenkung des Fahrpedals und/oder der Fahrpedalgradient, werden dabei seitens der Motorsteuerung und/oder -regelung, beziehungsweise bei Schaltungen seitens der Getriebesteuerung, in ein korrespondierendes Motorwunschmoment umgerechnet. Bei der Geschwindigkeitsregelung, das heißt der Beschleunigung auf die Sollgeschwindigkeit, fehlen derartige Fahrpedalinformationen jedoch in der Regel. Um diese Lücke zu schließen werden bei bevorzugten Ausführungsformen der Erfindung mehrere unterschiedliche Beschleunigungsmuster vorgesehen, von denen zumindest eins zum Nachführen der Istgeschwindigkeit verwendet wird. Die unterschiedlichen Beschleunigungsmuster können in einem einfachen Fall durch eine langsame, eine mittlere und eine schnelle Beschleunigung gebildet sein. Weiterhin ist es denkbar, die Beschleunigungsmuster an die Fahrzeugbeladung, die Fahrbahnsteigung, den Fahrbahnverlauf, den Fahrertyp, eine Radschlupferkennung und so weiter anzupassen. Eine Einstellung des gewünschten Beschleunigungsmusters beziehungsweise der gewünschten Beschleunigungsdynamik kann auch durch Einstellen eines üblicherweise implementierten Geschwindigkeitsreglers, beispielsweise eines PID-Reglers oder dergleichen, im Tempomaten erfolgen.

In diesem Zusammenhang kann das erfindungsgemäße Verfahren vorsehen, dass die Auswahl des verwendeten Beschleunigungsmusters vom Fahrer vornehmbar ist. Beispielsweise ist es möglich, dass der Fahrer unter Beschleunigungsmustern für eine langsame, eine mittlere und eine schnelle Beschleunigung das zu verwendende Beschleunigungsmuster auswählt.

Zusätzlich oder alternativ kann bei dem erfindungsgemäßen Verfahren vorgesehen sein, dass die Auswahl des verwendeten Beschleunigungsmusters anhand von während des zurückliegenden Fahrbetriebs gewonnenen Informationen vornehmbar ist. Es ist bereits bekannt, fahrerspezifische Größen, beispielsweise eine sportliche oder komfortbetonte Fahrweise, zu ermitteln, und diese Informationen beispielsweise zur Schaltübergangssteuerung zu verwenden. Die gleichen oder ähnlichen Informationen können dazu verwendet werden, Beschleunigungsmuster zu erstellen und/oder auszuwählen.

Eine vorteilhafte Weiterbildung des erfindungsgemäßen Verfahrens sieht vor, dass bei der Durchführung des Schrittes b) der Abstand zu und/oder die Geschwindigkeit von eventuellen Hindernissen berücksichtigt wird. Bei den Hindernissen kann es sich sowohl um stationäre Hindernisse als auch um sich bewegende Hindernisse auf der Fahrbahn und/oder am Fahrbahnrand handeln, beispielsweise um vorausfahrende Fahrzeuge. Um potentiellen Gefahrensituationen rechtzeitig in geeigneter Weise zu begegnen, ermöglicht die Geschwindigkeitsregelung auch in diesem Zusammenhang vorzugsweise auch automatische Bremseingriffe. Die Verzögerungsdynamik kann beispielsweise der aktuellen Fahrsituation angepasst werden, um ein situationsgerechtes Verzögern zu gewährleisten, das heißt bei großem Geschwindigkeitsunterschied und kleinem Abstand zum vorausliegenden Hindernis soll die Verzögerungsdynamik hoch sein, bei kleinem Geschwindigkeitsunterschied und großem Abstand dagegen niedrig.

Bei einer vorteilhaften Ausführungsform des erfindungsgemäßen Verfahrens ist vorgesehen, dass der Antriebsstrang mehrere Komponenten umfasst, die jeweils Leistung abgeben und/oder aufnehmen können, und dass die Durchführung des Schrittes c) das Einwirken auf eine oder mehrere dieser Komponenten umfasst. Je nach dem welche Komponenten sich im Antriebsstrang befinden, beispielsweise Verbrennungsmotor, Startergenerator, Elektromotor, Getriebe und Kombinationen hieraus, kann zentral entschieden werden, welche Antriebsstrangkomponenten zum Erreichen und/oder Halten der Sollgeschwindigkeit verwendet werden. Dies ermöglicht sowohl hinsichtlich des Verbrauchs als auch hinsichtlich des Komforts eine wirkungsgradoptimierte Antriebsstrangsteuerung. Beispielsweise ist es wie erwähnt denkbar, bei niedrigen Wunsch- beziehungsweise Sollgeschwindigkeiten nur einen Elektromotor zum Antrieb zu verwenden.

Bei bevorzugten Ausführungsformen des erfindungsgemäßen Verfahrens ist vorgesehen, dass die Durchführung des Schrittes c) auf Radmomentbasis erfolgt. Auf diese Weise kann auch zukünftigen Entwicklungen bezüglich dem Antriebsstrang Rechnung getragen werden und die Antriebsstrangkomponenten können optimal eingesetzt werden. Dies gilt neben der automatischen Geschwindigkeitsregelung und der hierzu verwendeten Beschleunigungsmuster vorzugsweise auch für den herkömmlichen Fahrbetrieb.

Die erfindungsgemäße Vorrichtung zum Einleiten und Durchführen einer automatischen Geschwindigkeitsregelung eines Kraftfahrzeuges baut auf dem gattungsgemäßen Stand der Technik dadurch auf, dass sie mit einer Getriebesteuerung und/oder -regelung in Verbindung steht, und dass sie beim Einleiten und/oder beim Durchführen der automatischen Geschwindigkeitsregelung ein oder mehrmals feststellt, ob das Getriebe in dem Automatenmodus oder in dem Manuellmodus betrieben wird, um gegebenenfalls einen Wechsel in den Automatenmodus des Getriebes auszulösen, wenn das Getriebe in dem Manuellmodus betrieben wird. Bei der erfindungsgemäßen Vorrichtung ist vorgesehen, dass sie beim Einleiten und/oder beim Durchführen der automatischen Geschwindigkeitsregelung ein oder mehrmals bestimmt, ob eine Veränderung der Übersetzung des Getriebes vorteilhaft ist, und dass sie den Wechsel in den Automatenmodus nur dann auslöst, wenn die Veränderung der Übersetzung des Getriebes vorteilhaft ist. Dadurch ergeben sich die im Zusammenhang mit dem erfindungsgemäßen Verfahren erläuterten Vorteile in gleicher oder ähnlicher Weise, weshalb zur Vermeidung von Wiederholungen auf die entsprechenden Ausführungen verwiesen wird.

Gleiches gilt sinngemäß für die folgenden bevorzugten Ausführungsformen der erfindungsgemäßen Vorrichtung, wobei auch bezüglich der durch diese Ausführungsformen erzielbaren Vorteile auf die entsprechenden Ausführungen im Zusammenhang mit dem erfindungsgemäßen Verfahren verwiesen wird.

Bei bestimmten Ausführungsformen der erfindungsgemäßen Vorrichtung ist vorgesehen, dass sie den Wechsel in den Automatenmodus des Getriebes auslöst, indem sie dem Fahrer signalisiert, dass er den Wechsel des Getriebes in den Automatenmodus manuell vornehmen sollte.

Bei anderen Ausführungsformen der erfindungsgemäßen Vorrichtung ist vorgesehen, dass sie den Wechsel in den Automatenmodus des Getriebes auslöst, indem sie die Getriebesteuerung und/oder -regelung derart ansteuert, dass diese den Wechsel automatisch vornimmt.

Auch bei bevorzugten Ausführungsformen der erfindungsgemäßen Vorrichtung ist vorgesehen, dass sie beim Einleiten der automatischen Geschwindigkeitsregelung den Modus speichert, in dem das Getriebe momentan betrieben wird.

Ähnlich wie bei dem erfindungsgemäßen Verfahren sieht auch eine bevorzugte Ausführungsform der erfindungsgemäßen Vorrichtung in diesem Zusammenhang weiterhin vor, dass sie die Getriebesteuerung und/oder -regelung beim Beenden der automatischen Geschwindigkeitsregelung derart ansteuert, dass diese einen Betrieb des Getriebes in dem gespeicherten Modus sicherstellt.

Bei bevorzugten Ausführungsformen der erfindungsgemäßen Vorrichtung ist vorgesehen, dass sie die automatische Geschwindigkeitsregelung beendet, wenn der Fahrer des Kraftfahrzeuges den Manuellmodus des Getriebes aktiviert.

Weiterhin kann bei der erfindungsgemäßen Vorrichtung vorgesehen sein, dass sie die automatische Geschwindigkeitsregelung einleitet oder dem Fahrer des Kraftfahrzeuges die Einleitung der automatischen Geschwindigkeitsregelung anbietet, wenn detektiert wird, dass der Fahrer die Geschwindigkeit ungefähr konstant hält oder versucht, die Geschwindigkeit ungefähr konstant zu halten.

Auch eine bevorzugte Weiterbildung der erfindungsgemäßen Vorrichtung sieht vor, dass sie beim Einleiten und/oder beim Durchführen der automatischen Geschwindigkeitsregelung ein oder mehrmals eine Sollgeschwindigkeit erfasst.

Bei besonders bevorzugten Ausführungsformen der erfindungsgemäßen Vorrichtung ist vorgesehen, dass sie zur Durchführung der automatischen Geschwindigkeitsregelung ein Beschleunigungsmuster verwendet, das unter mehreren unterschiedlichen gespeicherten Beschleunigungsmustern ausgewählt wurde.

In diesem Zusammenhang sieht die erfindungsgemäße Vorrichtung vorzugsweise weiterhin vor, dass sie die Auswahl des verwendeten Beschleunigungsmusters vom Fahrer des Kraftfahrzeuges vornehmen lässt.

Zusätzlich oder alternativ kann in diesem Zusammenhang bei der erfindungsgemäßen Vorrichtung vorgesehen sein, dass sie die Auswahl des verwendeten Beschleunigungsmusters anhand von während des zurückliegenden Fahrbetriebs gewonnen Informationen vornimmt.

Ähnlich wie bei dem erfindungsgemäßen Verfahren sieht auch eine vorteilhafte Weiterbildung der erfindungsgemäßen Vorrichtung vor, dass sie beim Durchführen der automatischen Geschwindigkeitsregelung den Abstand zu und/oder die Geschwindigkeit von eventuellen Hindernissen berücksichtigt.

Weiterhin kann bei der erfindungsgemäßen Vorrichtung vorgesehen sein, dass sie beim Durchführen der automatischen Geschwindigkeitsregelung direkt oder indirekt auf eine oder mehrere Komponenten des Antriebsstrangs einwirkt, die jeweils Leistung abgeben und/oder aufnehmen können.

Auch bei der erfindungsgemäßen Vorrichtung wird es als vorteilhaft erachtet, wenn vorgesehen ist, dass sie die automatische Geschwindigkeitsregelung auf Radmomentbasis durchführt.

Der Erfindung liegt die Erkenntnis zugrunde, dass es möglich ist, Synergien von Tempomaten und automatisierten Getrieben durch geeignete Verknüpfungen zu nutzen. Die Erfindung kann bei allen automatisierten Getrieben verwendet werden. Bei teilautomatisierten Getrieben können zumindest einige der erläuterten Ausführungsformen verwirklicht werden.

Bevorzugte Ausführungsformen der Erfindung werden nachfolgend unter Bezugnahme auf die beigefügten Zeichnungen beispielhaft erläutert.

Es zeigen:
- Figur 1: ein Flussdiagramm, das eine relativ einfache Ausführungsform des erfindungsgemäßen Verfahrens veranschaulicht,
- Figur 2: ein Flussdiagramm, das ein Beispiel für eine Geschwindigkeitsregelung auf Radmomentbasis veranschaulicht,
- Figur 3: ein Blockschaltbild, dass das Zusammenwirken einer Ausführungsform der erfindungsgemäßen Vorrichtung mit weiteren Komponenten eines Kraftfahrzeugs in vereinfachter Weise veranschaulicht, und
- Figur 4: zwei Graphen, die den Zusammenhang zwischen Soll-Radmomentverlauf und Geschwindigkeit veranschaulichen.

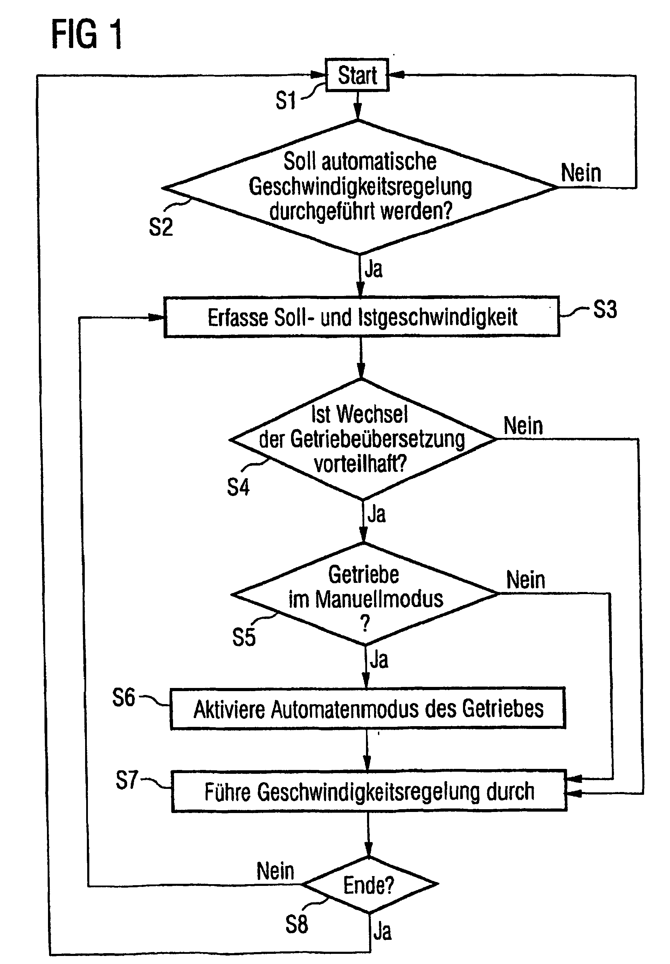

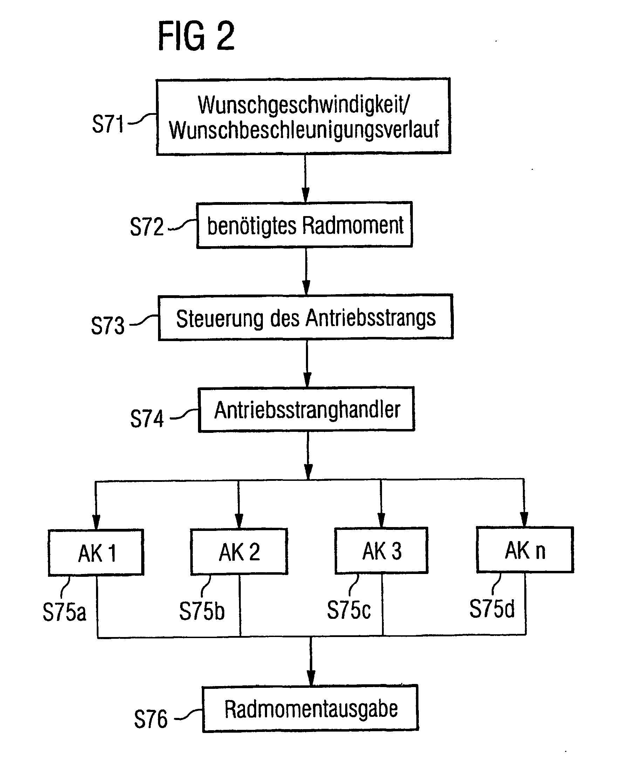

Figur 1 zeigt ein Flussdiagramm, das eine relativ einfache Ausführungsform des erfindungsgemäßen Verfahrens veranschaulicht. Der dargestellte Verfahrensablauf beginnt beim Schritt S1. Beim Schritt S2 wird erfasst, ob eine automatische Regelung der Fahrzeuggeschwindigkeit durchgeführt werden soll, was dem Verfahrensschritt a) entspricht. Zu diesem Zweck werden die Bedienelemente der erfindungsgemäße Vorrichtung beziehungsweise eines Tempomaten in geeigneter Weise abgefragt. Weiterhin ist es zu diesem Zweck möglich, zu überwachen, ob der Fahrer des Kraftfahrzeuges die Geschwindigkeit ungefähr konstant hält oder versucht die Geschwindigkeit ungefähr konstant zu halten. Falls dies der Fall ist, kann dem Fahrer in geeigneter Weise angeboten werden, die automatische Geschwindigkeitsregelung durchzuführen. Sofern keine automatische Geschwindigkeitsregelung durchgeführt werden soll wird zurück zum Schritt S1 verzweigt. Sofern beim Schritt S2 festgestellt wird, dass eine automatische Geschwindigkeitsregelung durchgeführt werden soll, wird zum Schritt S3 verzweigt. Beim Schritt S3 wird die Wunsch- beziehungsweise Sollgeschwindigkeit und die Istgeschwindigkeit erfasst. Das Erfassen der Sollgeschwindigkeit kann beispielsweise erfolgen, indem die momentane Istgeschwindigkeit durch die Betätigung eines Bedienelementes als Sollgeschwindigkeit übernommen wird. Weiterhin kann in diesem Zusammenhang vorgesehen sein, dass der Fahrer die Sollgeschwindigkeit unabhängig von der momentanen Istgeschwindigkeit in geeigneter Weise festlegt. Im Hinblick auf automatisierte Fahrzeugleitsysteme ist es weiterhin denkbar, dass die Sollgeschwindigkeit von externen Einrichtungen zugeführt wird. Nachdem die Soll- und Istgeschwindigkeit beim Schritt S3 erfasst wurde wird beim Schritt S4 fortgefahren. Beim Schritt S4 wird überprüft, ob ein Wechsel der Getriebeübersetzung vorteilhaft ist. Zu diesem Zweck können beispielsweise die Istgeschwindigkeit, die Motordrehzahl und die Radmomente sowie die aktuelle Getriebeübersetzung ausgewertet werden. Sofern beim Schritt S4 festgestellt wird, dass ein Wechsel der Getriebeübersetzung nicht vorteilhaft ist, wird zum Schritt S7 verzweigt, indem die später anhand von Figur 2 näher erläuterte Geschwindigkeitsregelung durchgeführt wird. Falls beim Schritt S4 festgestellt wird, dass ein Wechsel der Getriebeübersetzung vorteilhaft ist, wird beim Schritt S5 fortgefahren. Im Schritt S5 wird überprüft, ob das Getriebe in dem manuellen Modus oder in dem Automatenmodus betrieben wird. Sofern das Getriebe bereits in dem Automatenmodus betrieben wird, wird zum Schritt S7 verzweigt, indem die Geschwindigkeitsregelung durchgeführt wird. Falls das Getriebe in dem manuellen Modus betrieben wird, wird beim Schritt S6 fortgefahren, in dem der Automatenmodus des Getriebes aktiviert wird. Für die in Figur 1 dargestellte Ausführungsform des erfindungsgemäßen Verfahrens soll davon ausgegangen werden, dass der Modus des Getriebes von der Getriebesteuerung beziehungsweise -regelung automatisch gewechselt werden kann, das heißt ohne dass hierzu ein Eingriff des Fahrers erforderlich ist. Die vorstehend erläuterten Schritte S3 bis S6 entsprechen bei der in Figur 1 dargestellten Ausführungsform des erfindungsgemäßen Verfahrens dem Verfahrensschritt b). Nachdem der Automatenmodus des Getriebes beim Schritt S6 aktiviert wurde wird beim Schritt S7 fortgefahren, in dem die Geschwindigkeitsregelung durchgeführt wird (Verfahrensschritt c)), was später anhand von Figur 2 näher erläutert wird. Beim Schritt S8 wird überprüft, ob die Geschwindigkeitsregelung beendet werden soll. Ein Ende der Geschwindigkeitsregelung kann durch unterschiedliche Abbruchkriterien hervorgerufen werden, beispielsweise durch das Betätigen eines Bedienelementes des Tempomaten, die Betätigung des Bremspedals oder im Hinblick auf automatisierte Leitverfahren auch durch externe Beeinflussung. Sofern die automatische Geschwindigkeitsregelung beendet werden soll wird zum Schritt S1 zurückverzweigt. Anderenfalls wird zum Schritt S3 zurückverzweigt, in dem die Soll- und Istgeschwindigkeit erneut erfasst wird. Zumindest beim erneuten Durchlaufen des Schrittes S3 kann vorgesehen sein, dass die bisherige Soll- und Istgeschwindigkeit übernommen wird, sofern keine Eingriffe des Fahrers vorgenommen wurden.

Figur 2 zeigt ein Flussdiagramm, das ein Beispiel für eine Geschwindigkeitsregelung auf Radmomentbasis veranschaulicht. Die Durchführung der Geschwindigkeitsregelung auf Radmomentbasis ist vorteilhaft, weil das erfindungsgemäße Verfahren (und auch die erfindungsgemäße Vorrichtung) dadurch in relativ einfacher Weise an konstruktive Veränderungen des Antriebsstrangs angepasst werden kann. Beim Schritt S71 wird die Wunschgeschwindigkeit und ein Wunschbeschleunigungsverlauf festgelegt. Die Wunschgeschwindigkeit entspricht dabei der Sollgeschwindigkeit, die bereits im in Figur 1 dargestellten Schritt S3 erfasst wurde. Der Wunschbeschleunigungsverlauf kann beispielsweise aus einer Mehrzahl von gespeicherten unterschiedlichen Beschleunigungsmustern ausgewählt werden. Die Beschleunigungsmuster können beispielsweise fest vorgegeben und/oder anhand von Informationen festgelegt werden, die während des zurückliegenden Fahrbetriebs gewonnen wurden. Dadurch kann beispielsweise ein an den jeweiligen Fahrer angepasstes sportliches oder komfortbetontes Beschleunigungsmuster festgelegt und/oder ausgewählt werden. Beim Schritt S72 wird aus den bisher gewonnenen Informationen das benötigte Radmoment berechnet. Anschließend wird beim Schritt S73 fortgefahren, in dem die Steuerung des Antriebsstrangs eingeleitet wird. Bei der in Figur 2 dargestellten Ausführungsform wird die Steuerung des Antriebsstrangs von einem im Schritt S74 aktiven Antriebsstranghandler durchgeführt, der bei den Schritten 75a bis 75d in geeigneter Weise auf eine oder mehrere Antriebsstrangkomponenten AK1 bis AKn einwirkt. Bei diesen Antriebsstrangkomponenten AK1 bis AKn kann es sich beispielsweise um einen Verbrennungsmotor und/oder einen Elektromotor (beispielsweise in Form eines Startergenerators) und/oder das Getriebe und/oder sonstige Komponenten handeln, die Leistung aufnehmen und/oder abgeben können. Nachdem in geeigneter Weise auf eine oder mehrere der Antriebsstrangkomponenten AK1 bis AKn eingewirkt wurde erfolgt beim Schritt S76 die Ausgabe des gewünschten Radmoments.

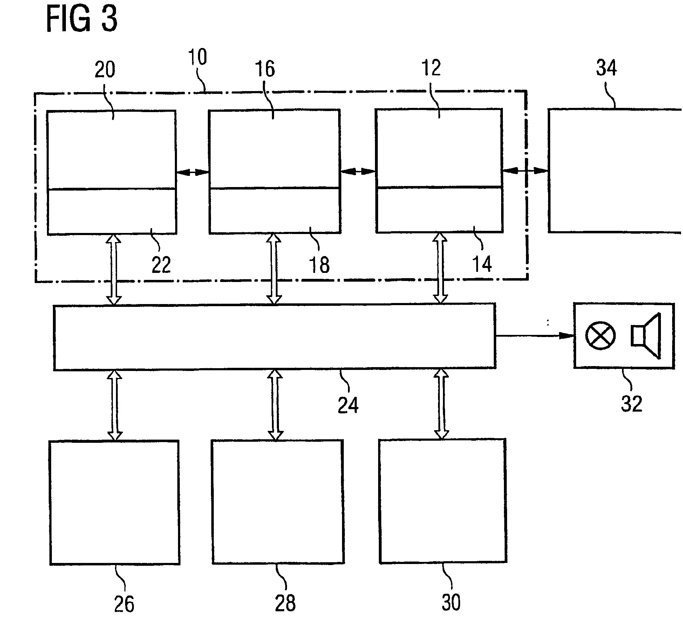

Figur 3 zeigt ein Blockschaltbild, dass das Zusammenwirken einer Ausführungsform der erfindungsgemäßen Vorrichtung mit weiteren Komponenten eines Kraftfahrzeugs in vereinfachter Weise veranschaulicht, wobei die dargestellte Vorrichtung auch zur Durchführung des erfindungsgemäßen Verfahrens geeignet ist. Bei der in Figur 3 dargestellten Ausführungsform umfasst ein Antriebsstrang 10 einen Verbrennungsmotor 20, dem Verbrennungsmotorsensoren und -stellglieder 22 zugeordnet sind. Auf der Abtriebswelle des Verbrennungsmotors 20 ist ein Startergenerator 16 vorgesehen, der mit einer startergeneratorsteuerung beziehungsweise -regelung 18 ausgestattet ist. Ebenfalls mit der Abtriebswelle des Verbrennungsmotors 20 steht das Getriebe 12 in Verbindung, das sowohl in dem Manuellmodus als auch in dem Automatenmodus betrieben werden kann. Dem Getriebe 12 ist eine Getriebesteuerung beziehungsweise -regelung 14 zugeordnet. Das Getriebe 12 steht in an sich bekannter Weise mit zumindest einem Antriebsrad 34 in Verbindung. Bei der in Figur 3 dargestellten Ausführungsform ist die erfindungsgemäße Vorrichtung zumindest teilweise in einer mit 24 bezeichneten Motorsteuerung beziehungsweise -regelung implementiert. Die Motorsteuerung 24 steht weiterhin mit Tempomat-Bedienelementen 26 in Verbindung, die nach herkömmlicher Art durch Tasten und/oder Hebel und dergleichen gebildet sein können. Insbesondere bei Ausführungsformen, bei denen der Fahrer eine von der Istgeschwindigkeit unabhängige Sollgeschwindigkeit explizit angeben kann, wird bevorzugt, dass zu diesem Zweck geeignete Eingabeeinrichtungen vorgesehen sind, die beispielsweise eine Tastatur- und/oder Spracheingabe ermöglichen. Die Motorsteuerung 24 steht weiterhin mit Getriebe-Bedienelementen 28 in Verbindung, die bei automatisierten Handschaltgetrieben üblicherweise durch zumindest zwei Tasten gebildet sind. Im Falle eines automatisierten Fußschaltgetriebes sind die Getriebe-Bedienelemente 28 in geeigneter Weise anzupassen. In Figur 3 ist weiterhin eine Bildverarbeitungseinheit 30 angedeutet, die dazu ausgelegt ist, eventuelle Hindernisse beziehungsweise den Abstand zu diesen und gegebenenfalls deren Geschwindigkeit zu erfassen, damit Gefahrensituationen vermieden werden können, insbesondere indem die Geschwindigkeitsregelung die Sollgeschwindigkeit und damit die Istgeschwindigkeit geeignet anpasst, gegebenenfalls auch über einen Bremseingriff. Für den Fall, dass die erfindungsgemäße Vorrichtung bei der Aktivierung der Geschwindigkeitsregelung das Getriebe 12 über die Getriebesteuerung 14 nicht automatisch veranlasst, in den Automatenmodus zu wechseln, falls dies sinnvoll ist, ist in Figur 3 eine Signalisierungseinrichtung 32 angedeutet. Die Signalisierungseinrichtung 32 ist dann dazu vorgesehen, den Wechsel des Getriebes 12 in den Automatenmodus auszulösen, indem durch die Signalisierungseinrichtung 32 ein optisches und/oder akustisches Signal erzeugt wird, dass dem Fahrer signalisiert, dass er den Wechsel des Getriebes 12 in den Automatenmodus manuell vornehmen sollte, über die Getriebe-Bedienelemente 28.

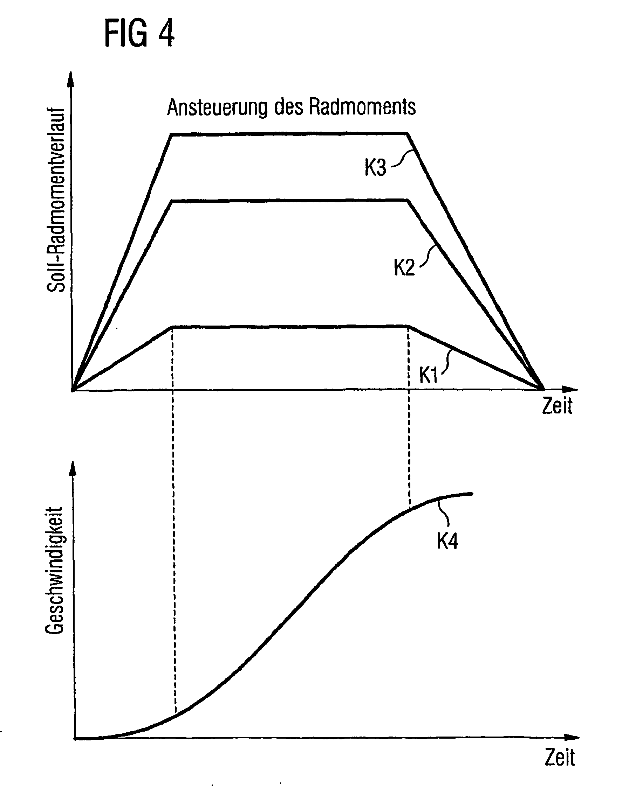

Figur 4 zeigt zwei Graphen, die den Zusammenhang zwischen Soll-Radmomentverlauf (oberer Graph) und Geschwindigkeit (unterer Graph) veranschaulichen. Dabei veranschaulicht die Kurve K1 ein Beschleunigungsmuster mit niedrigem Beschleunigungswert, die Kurve K2 veranschaulicht ein Beschleunigungsmuster mit mittlerem Beschleunigungswert und die Kurve K3 veranschaulicht ein Beschleunigungsmuster mit hohem Beschleunigungswert. Der durch die Kurve K1 veranschaulichte Beschleunigungswert kann beispielsweise zum Erreichen der Sollgeschwindigkeit verwendet werden, wenn vorher detektiert wurde, dass der Fahrer einen komfortbetonten Fahrstil bevorzugt. In ähnlicher Weise kann der durch die Kurve K3 veranschaulichte Beschleunigungswert verwendet werden, wenn detektiert wurde, dass der Fahrer einen sportlichen Fahrstil bevorzugt. Im unteren Teil von Figur 4 veranschaulicht die Kurve K4 den Geschwindigkeitsverlauf, der sich ergibt, wenn das Beschleunigungsmuster mit dem durch die Kurve K1 veranschaulichten niedrigen Beschleunigungswert verwendet wird, um die Sollgeschwindigkeit zu erreichen.

## Patentansprüche

1. Verfahren zum Entlasten des Fahrers eines Kraftfahrzeuges, dessen Antriebsstrang (10) ein automatisiertes Schaltgetriebe (12) aufweist, das in einem Automatenmodus, in dem die Übersetzung selbsttätig geändert wird, und in einem Manuellmodus betrieben werden kann, bei dem die folgenden Schritte automatisch durchgeführt werden:
a) Erfassen, ob eine Regelung der Fahrzeuggeschwindigkeit durchgeführt werden soll,
b) Einleiten der Regelung der Fahrzeuggeschwindigkeit, wenn eine Regelung der Fahrzeuggeschwindigkeit durchgeführt werden soll, und
c) Durchführen der Regelung der Fahrzeuggeschwindigkeit,
**dadurch gekennzeichnet, dass** bei der Durchführung des Schrittes b) und/oder des Schrittes c) ein oder mehrmals festgestellt wird, ob das Getriebe (12) in dem Automatenmodus oder in dem Manuellmodus betrieben wird, um gegebenenfalls einen Wechsel in den Automatenmodus des Getriebes (12) auszulösen, wenn das Getriebe (12) in dem Manuellmodus betrieben wird, dass bei der Durchführung des Schrittes b) und/oder des Schrittes c) ein oder mehrmals bestimmt wird, ob eine Veränderung der Übersetzung des Getriebes (12) vorteilhaft ist, und dass der Wechsel in den Automatenmodus nur dann ausgelöst wird, wenn die Veränderung der Übersetzung des Getriebes (12) vorteilhaft ist.

2. Verfahren nach Anspruch 1,
**dadurch gekennzeichnet, dass** das Auslösen des Wechsels in den Automatenmodus des Getriebes (12) erfolgt, indem dem Fahrer signalisiert wird, dass er den Wechsel des Getriebes (12) in den Automatenmodus manuell vornehmen sollte.

3. Verfahren nach Anspruch 1,
**dadurch gekennzeichnet, dass** das Auslösen des Wechsels in den Automatenmodus des Getriebes (12) erfolgt, indem eine Getriebesteuerung und/oder -regelung (14) derart angesteuert wird, dass sie den Wechsel automatisch vornimmt.

4. Verfahren nach einem der vorhergehenden Ansprüche,
**dadurch gekennzeichnet, dass** zu Beginn der Durchführung des Schrittes b) der Modus gespeichert wird, in dem das Getriebe (12) momentan betrieben wird.

5. Verfahren nach Anspruch 4,
**dadurch gekennzeichnet, dass** nach der Durchführung des Schrittes c) der Betrieb des Getriebes (12) in dem gespeicherten Modus sichergestellt wird.

6. Verfahren nach einem der vorhergehenden Ansprüche,
**dadurch gekennzeichnet, dass** der Schritt c) automatisch beendet wird, wenn der Fahrer den Manuellmodus des Getriebes (12) aktiviert.

7. Verfahren nach einem der vorhergehenden Ansprüche,
**dadurch gekennzeichnet, dass** der Schritt a) umfasst, das überwacht wird, ob der Fahrer die Geschwindigkeit ungefähr konstant hält oder versucht, die Geschwindigkeit ungefähr konstant zu halten.

8. Verfahren nach einem der vorhergehenden Ansprüche,
**dadurch gekennzeichnet, dass** der Schritt b) und/oder der Schritt c) das ein- oder mehrmalige Erfassen einer Sollgeschwindigkeit umfasst.

9. Verfahren nach Anspruch 8,
**dadurch gekennzeichnet, dass** bei der Durchführung des Schrittes c) durch ein Einwirken auf den Antriebsstrang (10) und/oder auf andere Komponenten des Fahrzeugs die Istgeschwindigkeit des Fahrzeugs der Sollgeschwindigkeit nachgeführt wird, und dass hierzu ein Beschleunigungsmuster verwendet wird, das aus mehreren unterschiedlichen Beschleunigungsmustern ausgewählt wird.

10. Verfahren nach Anspruch 9,
**dadurch gekennzeichnet, dass** die Auswahl des verwendeten Beschleunigungsmusters vom Fahrer vornehmbar ist.

11. Verfahren nach Anspruch 9 oder 10,
**dadurch gekennzeichnet, dass** die Auswahl des verwendeten Beschleunigungsmusters anhand von während des zurückliegenden Fahrbetriebs gewonnen Informationen vornehmbar ist.

12. Verfahren nach einem der vorhergehenden Ansprüche,
**dadurch gekennzeichnet, dass** bei der Durchführung des Schrittes b) der Abstand zu und/oder die Geschwindigkeit von eventuellen Hindernissen berücksichtigt wird.

13. Verfahren nach einem der vorhergehenden Ansprüche,
**dadurch gekennzeichnet, dass** der Antriebsstrang (10) mehrere Komponenten (16, 20) umfasst, die jeweils Leistung abgeben und/oder aufnehmen können, und dass die Durchführung des Schrittes c) das Einwirken auf eine oder mehrere dieser Komponenten (16, 20) umfasst.

14. Verfahren nach einem der vorhergehenden Ansprüche,
**dadurch gekennzeichnet, dass** die Durchführung des Schrittes c) auf Radmomentbasis erfolgt.

15. Vorrichtung zum Einleiten und Durchführen einer automatischen Geschwindigkeitsregelung eines Kraftfahrzeuges, dessen Antriebsstrang (10) ein automatisiertes Schaltgetriebe (12) aufweist, das in einem Automatenmodus, in dem die Übersetzung selbsttätig geändert wird, und in einem Manuellmodus betreibbar ist,
**dadurch gekennzeichnet, dass** sie mit einer Getriebesteuerung und/oder -regelung (14) in Verbindung steht, und dass sie beim Einleiten und/oder beim Durchführen der automatischen Geschwindigkeitsregelung ein oder mehrmals feststellt, ob das Getriebe (12) in dem Automatenmodus oder in dem Manuellmodus betrieben wird, um gegebenenfalls einen Wechsel in den Automatenmodus des Getriebes (12) auszulösen, wenn das Getriebe (12) in dem Manuellmodus betrieben wird, dass sie beim Einleiten und/oder beim Durchführen der automatischen Geschwindigkeitsregelung ein oder mehrmals bestimmt, ob eine Veränderung der Übersetzung des Getriebes (12) vorteilhaft ist, und dass sie den Wechsel in den Automatenmodus nur dann auslöst, wenn die Veränderung der Übersetzung des Getriebes (12) vorteilhaft ist.

16. Vorrichtung nach Anspruch 15,
**dadurch gekennzeichnet, dass** sie den Wechsel in den Automatenmodus des Getriebes (12) auslöst, indem sie dem Fahrer signalisiert, dass er den Wechsel des Getriebes (12) in den Automatenmodus manuell vornehmen sollte.

17. Vorrichtung nach Anspruch 15,
**dadurch gekennzeichnet, dass** sie den Wechsel in den Automatenmodus des Getriebes (12) auslöst, indem sie die Getriebesteuerung und/oder -regelung (14) derart ansteuert, dass diese den Wechsel automatisch vornimmt.

18. Vorrichtung nach einem der Ansprüche 15 bis 17,
**dadurch gekennzeichnet, dass** sie beim Einleiten der automatischen Geschwindigkeitsregelung den Modus speichert, in dem das Getriebe (12) momentan betrieben wird.

19. Vorrichtung nach Anspruch 18,
**dadurch gekennzeichnet, dass** sie die Getriebesteuerung und/oder -regelung (14) beim Beenden der automatischen Geschwindigkeitsregelung derart ansteuert, dass diese einen Betrieb des Getriebes (12) in dem gespeicherten Modus sicherstellt.

20. Vorrichtung nach einem der Ansprüche 15 bis 19,
**dadurch gekennzeichnet, dass** sie die automatische Geschwindigkeitsregelung beendet, wenn der Fahrer des Kraftfahrzeuges den Manuellmodus des Getriebes (12) aktiviert.

21. Vorrichtung nach einem der Ansprüche 15 bis 20,
**dadurch gekennzeichnet, dass** sie die automatische Geschwindigkeitsregelung einleitet oder dem Fahrer des Kraftfahrzeuges die Einleitung der automatischen Geschwindigkeitsregelung anbietet, wenn detektiert wird, dass der Fahrer die Geschwindigkeit ungefähr konstant hält oder versucht, die Geschwindigkeit ungefähr konstant zu halten.

22. Vorrichtung nach einem der Ansprüche 15 bis 21,
**dadurch gekennzeichnet, dass** sie beim Einleiten und/oder beim Durchführen der automatischen Geschwindigkeitsregelung ein oder mehrmals eine Sollgeschwindigkeit erfasst.

23. Vorrichtung nach Anspruch 22,
**dadurch gekennzeichnet, dass** sie zur Durchführung der automatischen Geschwindigkeitsregelung ein Beschleunigungsmuster verwendet, das unter mehreren unterschiedlichen gespeicherten Beschleunigungsmustern ausgewählt wurde.

24. Vorrichtung nach Anspruch 23,
**dadurch gekennzeichnet, dass** sie die Auswahl des verwendeten Beschleunigungsmusters vom Fahrer des Kraftfahrzeuges vornehmen lässt.

25. Vorrichtung nach Anspruch 23 oder 24,
**dadurch gekennzeichnet, dass** sie die Auswahl des verwendeten Beschleunigungsmusters anhand von während des zurückliegenden Fahrbetriebs gewonnen Informationen vornimmt.

26. Vorrichtung nach einem der Ansprüche 15 bis 25,
**dadurch gekennzeichnet, dass** sie beim Durchführen der automatischen Geschwindigkeitsregelung den Abstand zu und/oder die Geschwindigkeit von eventuellen Hindernissen berücksichtigt.

27. Vorrichtung nach einem der Ansprüche 15 bis 26,
**dadurch gekennzeichnet, dass** sie beim Durchführen der automatischen Geschwindigkeitsregelung direkt oder indirekt auf eine oder mehrere Komponenten (16, 20) des Antriebsstrangs (10) einwirkt, die jeweils Leistung abgeben und/oder aufnehmen können.

28. Vorrichtung nach einem der Ansprüche 15 bis 27,
**dadurch gekennzeichnet, dass** sie die automatische Geschwindigkeitsregelung auf Radmomentbasis durchführt.

## Claims

1. Method for relieving the load on the driver of a motor vehicle of which the drive train (10) features and automatic gearbox (12) which can be operated in an automatic mode in which the gear change is activated automatically, and in a manual mode, in which the following steps are executed automatically:
a) Recording whether the speed of the vehicle is to be regulated,
b) Initiating regulation of the speed of the vehicle, if the speed of the vehicle is to be regulated, and
c) Executing the regulation of the speed of the vehicle,
**characterized in that**, during execution of step b) and/or of step c) it is established one or more times whether the gearbox (12) is being operated in automatic mode or in manual mode in order to switch the gearbox (12) into automatic mode where necessary if the gearbox (12) is being operated in manual mode, during the execution of step b) and/or of step c) it is decided one or more times whether changing the transmission of the gearbox (12) is advantageous, and that the switch to automatic mode is only initiated if changing the transmission of the gearbox (12) to automatic is advantageous.

2. Method in accordance with claim 1,
**characterized in that** the initiation of the switch into the automatic mode of the gearbox (12) is undertaken by a signal being sent to the driver that he should have switched the gearbox (12) into automatic mode manually.

3. Method in accordance with claim 1,
**characterized in that** the initiation of the switch to automatic mode of the gearbox (12) is undertaken by a gearbox controller or regulator (14) being activated so as to make the switch automatically.

4. Method in accordance with one of the previous claims.
**characterized in that**, at the beginning of the execution of step b) the mode is stored in which the gearbox (12) is currently being operated.

5. Method according to Claim 4,
**characterized in that**, after the execution of step c) the operation of the gearbox (12) in the stored mode is ensured.

6. Method in accordance with one of the previous claims.
**characterized in that** step c) is ended automatically if the driver activates the manual mode of the gearbox (12).

7. Method in accordance with one of the previous claims.
**characterized in that** step a) includes monitoring whether the driver is keeping the speed approximately constant or is attempting to keep the speed approximately constant.

8. Method in accordance with one of the previous claims.
**characterized in that** step b) and/or step c) include recording a required speed one or more times.

9. Method in accordance with claim 8,
**characterized in that**, during execution of step c) by acting on the drive train (10) and/or other components of the vehicle, the actual speed of the vehicle is adjusted to the required speed and that an acceleration pattern is used for this purpose which is selected from a number of different acceleration patterns.

10. Method in accordance with claim 9,
**characterized in that** the acceleration pattern used can be selected by the driver.

11. Method in accordance with Claim 9 or 10,
**characterized in that** the acceleration pattern used is selected on the basis of information obtained during previous operation of the vehicle.

12. Method in accordance with one of the previous claims.
**characterized in that** , during execution of step b) the distance from and/or the speed of possible obstacles is taken into account.

13. Method in accordance with one of the previous claims.
**characterized in that** the drive train (10) comprises a number of components (16, 20) each of which can output or accept power and that the execution of step c) comprises acting on one or more of these components (16, 20).

14. Method in accordance with one of the previous claims.
**characterized in that** step c) is executed on the basis of the wheel moment.

15. Device for initiating and executing an automatic speed regulation of a motor vehicle of which the drive train (10) features an automatic gearbox (12) which can be operated in an automatic mode, in which gear changing is automatic, and in a manual mode,
**characterized in that** it is connected to a gearbox controller and/or regulator (14) and on initiation and/or execution of the automatic speed regulation it is established one or more times whether the gearbox (12) is being operated in automatic mode or in manual mode, so that if necessary a switch can be initiated to the automatic mode of the gearbox (12) if the gearbox (12) is being operated in manual mode, on initiation and/or execution of the automatic speed regulation it is determined one or more times whether a change of the transmission of the gearbox (12) is advantageous, and that it only initiates the switch to the automatic mode if it is advantageous to change the transmission of the gearbox (12).

16. Device in accordance with claim 15,
**characterized in that** it initiates the switch to automatic mode of the gearbox (12) by signalling the driver that they should have changed the gearbox (12) to automatic mode manually.

17. Device in accordance with claim 15,
**characterized in that** it initiates the switch to automatic mode of the gearbox (12) by activating the gearbox controller and/or regulator (14) such that the latter makes the switch automatically.

18. Device in accordance with one of the claims 15 to 17,
**characterized in that** , when initiating the automatic speed regulation, it stores the mode in which the gearbox (12) is currently being operated.

19. Device in accordance with claim 14,
**characterized in that**, on ending the automatic speed regulation, it activates the gearbox control and/or regulation (14) such that this ensures operation of the gearbox (12) in the stored mode.

20. Device in accordance with one of the claims 15 to 19,
**characterized in that** it ends the automatic speed regulation if the driver of the motor vehicle activates the manual mode of the gearbox (12).

21. Device in accordance with one of the claims 15 to 20,
**characterized in that** it initiates automatic speed regulation or offers the driver of the motor vehicle the option of initiating automatic speed regulation if it is detected that the driver is keeping the speed approximately constant or is attempting to keep the speed approximately constant.

22. Device in accordance with one of the claims 15 to 21,
**characterized in that**, on initiating and/or executing the automatic speed regulation, it records the required speed one or more times.

23. Device in accordance with claim 22,
**characterized in that**, to execute the automatic speed regulation, it uses an acceleration pattern which has been selected from a number of different stored acceleration patterns.

24. Device in accordance with claim 23,
**characterized in that** it lets the selection of the acceleration pattern be made by the driver of the motor vehicle.

25. Device in accordance with Claim 23 or 24,
**characterized in that** that it makes the selection of the acceleration pattern used on the basis of information obtained during previous operation of the vehicle.

26. Device in accordance with one of the claims 15 to 25,
**characterized in that** , when executing the automatic speed regulation, it takes into account the distance to and/or the speed of possible obstacles.

27. Device in accordance with one of the claims 15 to 26,
**characterized in that**, when executing the automatic speed regulation, it acts directly or indirectly on one or more components (16, 20) of the drive train (10) each of which can output and/or can accept power.

28. Device in accordance with one of the claims 15 to 27,
**characterized in that** it executes the automatic speed regulation on the basis of the wheel moment.

## Revendications

1. Procédé pour décharger le conducteur d'un véhicule automobile, dont la ligne d'entraînement (10) comporte une boîte de vitesses automatisée (12) qui peut être exploitée dans un mode automatique dans laquelle le rapport de transmission est modifié de façon automatique et dans un mode manuel, dans lequel les étapes suivantes sont réalisées de façon automatique :
a) détecter s'il faut procéder à une régulation de la vitesse du véhicule,
b) lancer la régulation de vitesse véhicule s'il faut procéder à une régulation de la vitesse du véhicule et
c) procéder à la régulation de vitesse véhicule,
**caractérisé en ce que** lors de la réalisation de l'étape b) et/ou de l'étape c), on constate une ou plusieurs fois si la boîte de vitesses (12) doit être exploitée en mode automatique ou en mode manuel, pour déclencher le cas échéant un passage de la boîte de vitesses (12) en mode automatique si la boîte de vitesses (12) est exploitée en mode manuel, **en ce que** lors de la réalisation de l'étape b) et/ou de l'étape c) on détermine une ou plusieurs fois si une modification du rapport de transmission (12) est avantageuse et **en ce que** le passage au mode automatique n'est déclenché que si la modification du rapport de transmission (12) est avantageuse.

2. Procédé selon la revendication 1,
**caractérisé en ce que** le déclenchement du passage de la boîte de vitesses (12) en mode automatique est assuré en signalant au conducteur qu'il devrait procéder au changement du passage manuel de la boîte de vitesses (12) en mode automatique.

3. Procédé selon la revendication 1,
**caractérisé en ce que** le déclenchement du passage de la boîte de vitesses (12) en mode automatique est assuré en actionnant un système de commande et/ou de réglage (14) de la boîte de vitesses pour qu'il procède automatiquement au changement.

4. Procédé selon l'une quelconque des revendications précédentes,
**caractérisé en ce qu'**au début de la réalisation de l'étape b) on mémorise le mode dans lequel la boîte de vitesses (12) est actuellement exploitée.

5. Procédé selon la revendication 4,
**caractérisé en ce qu'**après la réalisation de l'étape c), on assure l'exploitation de la boîte de vitesses (12) dans le mode mémorisé.

6. Procédé selon l'une quelconque des revendications précédentes,
**caractérisé en ce que** l'étape c) s'arrête automatiquement, lorsque le conducteur active le mode manuel de la boîte de vitesses (12).

7. Procédé selon l'une quelconque des revendications précédentes,
**caractérisé en ce que** l'étape a) comprend la vérification du fait si le conducteur maintient une vitesse approximativement constante ou s'il essaie de maintenir une vitesse approximativement constante.

8. Procédé selon l'une quelconque des revendications précédentes,
**caractérisé en ce que** l'étape b) et/ou l'étape c) comporte la détection unique ou répétée d'une vitesse de consigne.

9. Procédé selon la revendication 8,
**caractérisé en ce que** lors de la réalisation de l'étape c), la vitesse réelle d'un véhicule est adaptée à la vitesse de consigne par une influence sur la ligne d'entraînement (10) ou sur d'autres composants du véhicule et **en ce qu'**à cet effet on utilise un modèle d'accélération qui est sélectionné parmi plusieurs modèles d'accélération différents.

10. Procédé selon la revendication 9,
**caractérisé en ce que** le conducteur peut procéder à la sélection du modèle d'accélération utilisé.

11. Procédé selon la revendication 9 ou 10,
**caractérisé en ce que** la sélection de modèle d'accélération utilisé est assurée à l'aide d'informations collectées lors des opérations de conduite précédentes.

12. Procédé selon l'une quelconque des revendications précédentes,
**caractérisé en ce que** lors de la réalisation de l'étape b), la distance par rapport à des obstacles éventuels et/ou la vitesse de ces derniers est prise en considération.

13. Procédé selon l'une quelconque des revendications précédentes,
**caractérisé en ce que** la ligne d'entraînement (10) comprend plusieurs composants (16, 20) qui sont respectivement en mesure de restituer et/ou d'absorber de la puissance est **en ce que** la réalisation de l'étape c) comporte l'influence de l'un ou de plusieurs de ces composants (16, 20).

14. Procédé selon l'une quelconque des revendications précédentes,
**caractérisé en ce que** la réalisation de l'étape c) est basée sur le couple à la roue.

15. Dispositif pour lancer et réaliser une régulation automatique de la vitesse d'un véhicule automobile, dont la ligne d'entraînement (10) comporte une boîte de vitesses automatique (12) qui peut être exploitée dans un mode automatique dans laquelle le rapport de transmission est modifié de façon automatique et dans un mode manuel,
**caractérisé en ce qu'**il est en liaison avec un système de commande et/ou de réglage de la boîte de vitesses (14) et **en ce que** lors du lancement et/ou de la réalisation de la régulation de vitesse automatique, il constate une ou plusieurs fois si la boîte de vitesses (12) est exploitée en mode automatique ou en mode manuel, pour déclencher le cas échéant un passage de la boîte de vitesses (12) en mode automatique de la boîte de vitesses (12) si la boîte de vitesses est exploitée en mode manuel, **en ce que** lors du lancement et/ou de la réalisation de la régulation de vitesse automatique il détermine une ou plusieurs fois si une modification du rapport de transmission (12) est avantageuse et **en ce qu'**il déclenche le passage en mode automatique uniquement si la modification du rapport de transmission (12) est avantageuse.

16. Dispositif selon la revendication 15,
**caractérisé en ce qu'**il déclenche le passage de la boîte de vitesses en mode automatique (12) en signalant au conducteur qu'il devrait procéder manuellement au passage de la boîte de vitesses (12) en mode automatique.

17. Dispositif selon la revendication 15,
**caractérisé en ce qu'**il déclenche le passage de la boîte de vitesses (12) en mode automatique en activant le système de commande et/ou de réglage de la boîte de vitesses (14) pour que ce dernier procède automatiquement au changement.

18. Dispositif selon l'une quelconque des revendications 15 à 17,
**caractérisé en ce que** lors du lancement de la régulation de vitesse automatique, il mémorise le mode dans lequel la boîte de vitesses (12) est actuellement exploitée.

19. Dispositif selon la revendication 18,
**caractérisé en ce qu'**à l'arrêt de la régulation de vitesse automatique, il active le système de commande et/ou de réglage de la boîte de vitesses (14), de façon à ce qu'il garantisse une exploitation de la boîte de vitesses (12) dans le mode mémorisé.

20. Dispositif selon l'une quelconque des revendications 15 à 19,
**caractérisé en ce qu'**il arrête la régulation de vitesse automatique lorsque le conducteur du véhicule automobile active le mode manuel de la boîte de vitesses (12).

21. Dispositif selon l'une quelconque des revendications 15 à 20,
**caractérisé en ce qu'**il lance la régulation de vitesse automatique ou **en ce qu'**il propose au conducteur du véhicule automobile de lancer la régulation de vitesse automatique s'il détecte que le conducteur maintient une vitesse approximativement constante ou qu'il essaie de maintenir une vitesse approximativement constante.

22. Dispositif selon l'une quelconque des revendications 15 à 21,
**caractérisé en ce que** lors du lancement et/ou de la réalisation de la régulation de vitesse automatique, il détecte une ou plusieurs fois une vitesse de consigne.

23. Dispositif selon la revendication 22,
**caractérisé en ce que** pour la réalisation de la régulation de vitesse automatique, il utilise un modèle d'accélération qui a été sélectionné parmi plusieurs différents modèles d'accélération mémorisés.

24. Dispositif selon la revendication 23,
**caractérisé en ce qu'**il laisse le conducteur du véhicule procéder à la sélection du modèle d'accélération utilisé.

25. Dispositif selon la revendication 23 ou 24,
**caractérisé en ce qu'**il procède à la sélection du modèle d'accélération utilisé à l'aide d'informations collectées lors des opérations de conduite précédentes.

26. Dispositif selon l'une quelconque des revendications 15 à 25,
**caractérisé en ce que** lors de la réalisation de la régulation de vitesse automatique, il prend en considération la distance par rapport à d'éventuels obstacles et/ou la vitesse de ces derniers.

27. Dispositif selon l'une quelconque des revendications 15 à 26,
**caractérisé en ce que** lors de la réalisation de la régulation de vitesse automatique, il influence directement ou indirectement un ou plusieurs composants (16, 20) de la ligne d'entraînement (10) qui sont en mesure de restituer et/ou d'absorber respectivement de la puissance.

28. Dispositif selon l'une quelconque des revendications 15 à 27,
**caractérisé en ce qu'**il procède à la régulation de vitesse automatique sur la base du couple à la roue.
